# EUROPÄISCHE PATENTSCHRIFT

(11) **EP 0 533 051 B1**
(45) Veröffentlichungstag und Bekanntmachung des Hinweises auf die Patenterteilung: **07.02.1996**
(21) Anmeldenummer: 92115472.0
(22) Anmeldetag: 10.09.1992
(51) Int. Cl.: F16P 3/00, B23Q 11/08, B23Q 5/58, F16P 3/16

(54) **Schutzeinrichtung für langgestreckte Maschinenteile**
Protection device for elongated machine parts
Dispositif de protection pour des éléments allongés de machine

(30) Priorität: 18.09.1991 DE 4130990
(43) Veröffentlichungstag der Anmeldung: 24.03.1993
(73) Patentinhaber: Firma Carl Zeiss, D-73446 Oberkochen (DE); CARL-ZEISS-STIFTUNG, HANDELND ALS CARL ZEISS, D-73446 Oberkochen (DE)
(72) Erfinder: Seitz, Karl, W-7082 Oberkochen (DE)

(56) Entgegenhaltungen:
- EP-A- 0 012 383
- EP-A- 0 116 807
- DE-A- 3 514 444
- DE-A- 3 532 702
- DE-A- 3 833 680
- DE-C- 3 527 063
- FR-A- 2 598 485
- PATENT ABSTRACTS OF JAPAN vol. 9, no. 162 (M-394)(1885) 6. Juli 1985& JP-A-60 034 572 (MIYOUTOKU K.K.)

## Beschreibung

Im Maschinenbau, insbesondere beim Bau von Koordinatenmeßgeräten ist es oft erforderlich, die in den Arbeitsbereich bzw. Meßbereich hineinragenden, langgestreckten beweglichen Maschinenteile, wie z.B. den das Meßwerkzeug (Tastkopf) tragenden Meßarm des Koordinatenmeßgerätes, gegen unbeabsichtigte Kollisionen zu schützen. Außerdem sollen Verletzungen des Bedienpersonals durch die beweglichen Maschinenteile verhindert werden.

Zu diesem Zweck sind bereits eine Reihe verschiedenartiger Schutzeinrichtungen bekannt.

So sind beispielsweise in der DE-A-35 27 063 Schutzeinrichtungen beschrieben, die um das zu schützende Maschinenteil einen Ultraschallmantel legen. Aus der EP-A-0 116 807 sowie der DE-A-35 14 444 sind außerdem Schutzeinrichtungen in Form mehrerer sich längs des Maschinenteils erstreckender Lichtschranken bekannt. Wenn der durch die Vielzahl nebeneinander angeordneter Lichtschranken oder Ultraschallkegel gebildete Schutzmantel durchbrochen wird, liefert die Elektronik, die diese Störung feststellt, ein Signal an die Notstop-Steuerung der betreffenden Maschine.

Diese bekannten Schutzeinrichtungen arbeiten zwar sehr zuverlässig, für eine ausreichend gute Absicherung sind jedoch eine Vielzahl von nebeneinander dicht an dicht angeordneten Lichtschranken erforderlich. Denn in dem,von den Lichtschranken gebildeten Schutzmantel dürfen keine Lücken entstehen, durch die hindurch z.B. Vorsprünge an dem zu vermessenden Objekt auf den Meßarm auftreffen und diesen beschädigen.

Es ist auch bekannt, zum Schutz der vertikalen Pinole von Koordinatenmeßgeräten mehrere um die Pinole herum angeordnete Spiralfedern vorzusehen, die auf einem anderen elektrischen Potential liegen als das metallische Maschinenteil und bei Berührung mit dem Maschinenteil, z.B. im Zuge einer Kollision, den Schutzschalter der Maschinen ansprechen lassen. Diese Lösung ist allerdings für waagerecht liegende Maschinenteile weniger geeignet, da die Federn dort durchhängen und zum Schwingen neigen und somit Fehlschaltungen auslösen. Diese Lösung ist außerdem für Maschinenteile aus Aluminium mit eloxierter Oberfläche nicht brauchbar, weil die nicht-leitende Eloxalschicht den elektrischen Kurzschluß zwischen Feder und Maschinenteil verhindert.

In der DE-A-38 33 680 ist eine Schutzeinrichtung für den Meßarm eines Koordinatenmeßgerätes beschrieben, bei der zwei Lichtschranken durch Ausnehmungen in den Trennstegen eines das Maschinenteil umgebenden Faltenbalges geführt sind. Ein Verschieben der Trennstege im Kollisionsfall unterbricht die Lichtschranken und die von den Detektoren gemeldete Änderung der Lichtintensität wird als Signal für die Notstop-Steuerung der Maschine weiterverarbeitet.

Mit dieser bekannten Lösung lassen sich vorhandene Maschinen jedoch nicht ohne weiteres nachrüsten, da wegen der erforderlichen Mindestabmessungen für die Lichtquellen, Detektoren, den Strahlquerschnitt etc. größere Faltenbälge erforderlich werden, der Meßarm der Maschine damit mehr Raum einnimmt und die so modifizierte Maschine bereits auf der Basis des schlankeren Armes programmierten Bewegungsabläufen nicht mehr folgen kann. Es ist außerdem nicht einfach, bei Lichtschranken die Strahlrichtung und die Strahlintensität über einen längeren Zeitraum ausreichend konstant zu halten.

Der vorliegenden Erfindung liegt die Aufgabe zugrunde, eine Schutzeinrichtung für langgestreckte, quer zur Längsrichtung bewegliche Maschinenteile, insbesondere für die Meßarme von Koordinatenmeßgeräten zu schaffen, die bei möglichst geringem Aufwand eine hohe Störsicherheit bietet und sich außerdem zur Nachrüstung eignet.

Ausgehend von einer Schutzeinrichtung nach dem Oberbegriff des Anspruchs 1 wird diese Aufgabe durch die im Kennzeichen des Anspruchs 1 angegebenen Merkmale gelöst.

Da jedes Signal aus dem Kurzschluß zweier paarweise gespannter Drähte gewonnen wird, eignet sich die Schutzeinrichtung auch für Maschinenteile aus nicht-leitendem Material bzw. mit nichtleitender Oberfläche, wie z.B. eloxiertem Aluminium. Die Schutzeinrichtung baut außerdem sehr klein, so daß die Dimensionen des Maschinenteils bzw. seines Faltenbalgs beibehalten werden können, d.h. es ist kein größerer Balg erforderlich. Die Schutzeinrichtung ist außerdem universell einsetzbar, sowohl in senkrechter als auch in waagerechter Lage, läßt sich kostengünstig fertigen und bedingt nur einen sehr geringen Montageaufwand. Sie ist außerdem sehr langzeitstabil, da opto-elektronische Bauteile mit den ihnen eigenen Driften bzw. Alterungseffekten vermieden sind.

Um die Funktionssicherheit der Schutzeinrichtung über die volle Länge des Maschinenteils sicherzustellen, ist es zweckmäßig, die Spanneinrichtung für die Drehtpaare im Innern des in der Regel ohnehin hohlen Maschinenteils anzuordnen. Die Drähte werden dann durch Umlenkrollen am vorderen bzw. hinteren Ende des Meßarms geführt.

Um eine sichere Kontaktgabe zwischen den Drahtpaaren bei ganz unterschiedlichen auf das Maschinenteil einwirkenden Kollisionsrichtungen sicherzustellen, ist es vorteilhaft, die Drahtpaare in V-förmigen bzw. rautenförmigen Ausnehmungen zu führen. Hierbei sorgt die Form der Ausnehmungen dafür, daß die Drahtpaare mechanisch in Kontakt gelangen. Das gleiche Ergebnis läßt sich auch erreichen, wenn die Stege des Faltenbalges an einer oder mehreren Seiten mit leitenden Klemmen, vorzugsweise Kupferklemmen, versehen sind.

Besonders vorteilhaft ist es, wenn beide Maßnahmen gleichzeitig ergriffen werden und beispielsweise abwechselnd aufeinander folgende Stege des Faltenbalges einmal mit rautenförmigen bzw. V-förmigen Ausnehmungen und zum anderen mit leitenden Klemmen versehen sind.

Weitere Vorteile der Erfindung ergeben sich auf der nachfolgenden Beschreibung von Ausführungsbeispielen anhand der Fig. 1 bis 7 der beigefügten Zeichnungen.
- Fig. 1: ist eine perspektivische Darstellung eines Koordinatenmeßgerätes in Ständerbauweise.
- Fig. 2: stellt einen Schnitt des Meßarmes (4) des Gerätes aus Fig. 1 in vergrößertem Maßstab dar.
- Fig. 3a-c: sind vergrößerte Darstellungen des die Ausnehmung (9) enthaltenden Teils des Faltenbalgs (7) aus Fig. 2, gezeichnet bei unterschiedlichen, auf den Faltenbalg einwirkenden Kraftrichtungen.
- Fig. 4: ist eine vergrößerte Darstellung eines Teils des Trennstegs des Faltenbalgs (7), der mit einer leitenden Klemme versehen ist.
- Fig. 5: ist eine vergrößerte Darstellung eines Teil des Trennstegs eines Faltenbalgs mit leitenden Klemmen gemäß einem anderen Ausführungsbeispiel.
- Fig. 6: zeigt den Meßarm des Koordinatenmeßgerätes aus Fig. 1 in Seitenansicht bei abgenommenen Faltenbalg.
- Fig. 7: ist ein Schnitt durch das vordere Ende des Meßarms (4) aus Fig. 6 entlang der Linie VII in Fig. 6 in vergrößertem Maßstabe.
- Fig. 8: ist eine vergrößerte Darstellung eines Teils des Trennstegs eines Faltenbalges mit Ausnehmungen gemäß einem weiteren Ausführungsbeispiel.

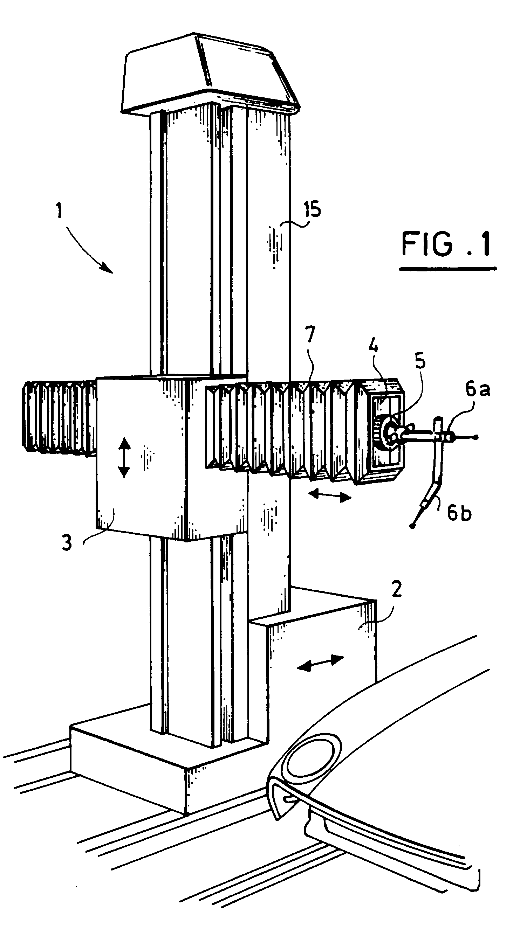

In Fig. 1 ist ein Koordinatenmeßgerät (1) in sogenannter Ständerbauweise dargestellt. Die Basis (2) dieses Gerätes ist entlang von in das Fundament eingelassenen Führungen insgesamt waagerecht verfahrbar. An seinem Ständer (15) ist ein Schlitten (3) höhenverschiebbar gelagert. Dieser wiederum nimmt den in seiner Längsrichtung gegenüber dem Schlitten (3) waagerecht verschiebbaren Querarm (4) auf. Der Querarm (4) ist der eigentliche Meßarm des Koordinatenmeßgerätes (1) und trägt an seiner Stirnseite eine Aufnahme (5) für verschiedene Taster (6a,6b), mit denen das Meßobjekt durch Antastung ausgemessen wird.

Die nicht sichtbaren Führungen des Querarmes (4) sind durch einen Faltenbalg (7) in dem Bereich abgedeckt, in dem der Querarm (4) aus dem Schlitten (3) heraus vorsteht. Demzufolge dehnen und stauchen sich die das vordere und hintere hervorstehende Ende des Querarms (4) abdeckenden Teile des Faltenbalges (7) bei jeder Bewegung des Querarms (4) in seiner Längsrichtung.

Da die Maschine im Zuge ihres Meßprogrammes den Querarm (4) auch mit hoher Geschwindigkeit seitlich, d.h. senkrecht zu seiner Längsrichtung sowie in der Höhe verfährt, können unbeabsichtigte Kollisionen mit im Meßraum abgestellten Gegenständen, bei falscher Programmierung mit dem zu vermessenden Objekt selbst, oder mit unachtsamem Bedienpersonal erfolgen.

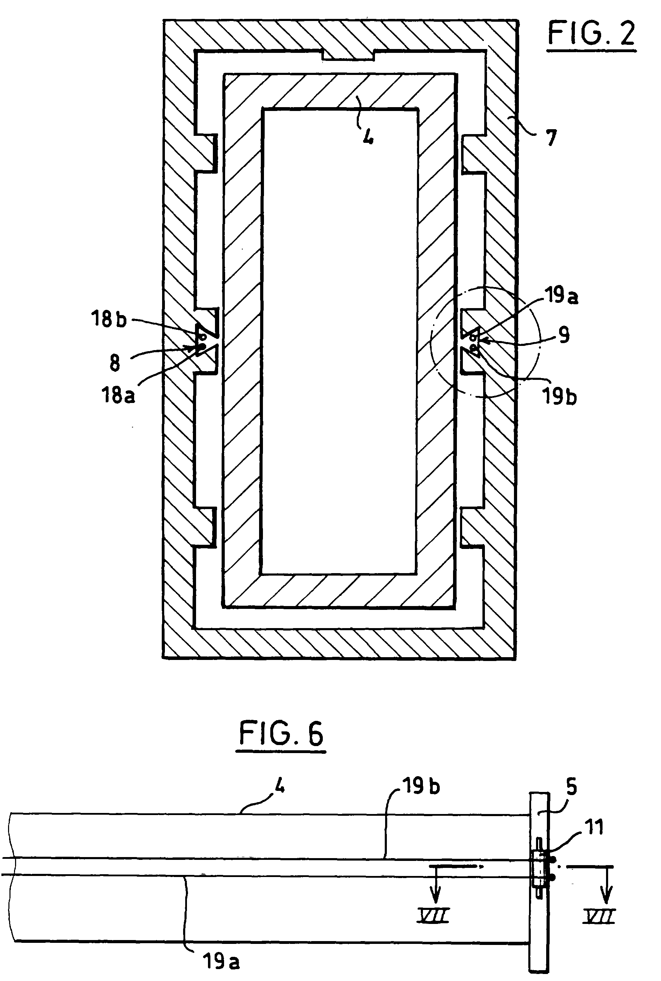

Um das zu vermeiden besitzen, wie in Fig. 2 dargestellt, die Trennstege des Faltenbalges (7) auf beiden Seiten mehrere ineinander fluchtende Stanzlöcher (8) bzw. (9). Im beschriebenen Ausführungsbeispiel sind zwei Reihen von Stanzlöchern (8,9) auf den beiden gegenüberliegenden Seiten an der Breitseite des Querarms (4) vorgesehen.

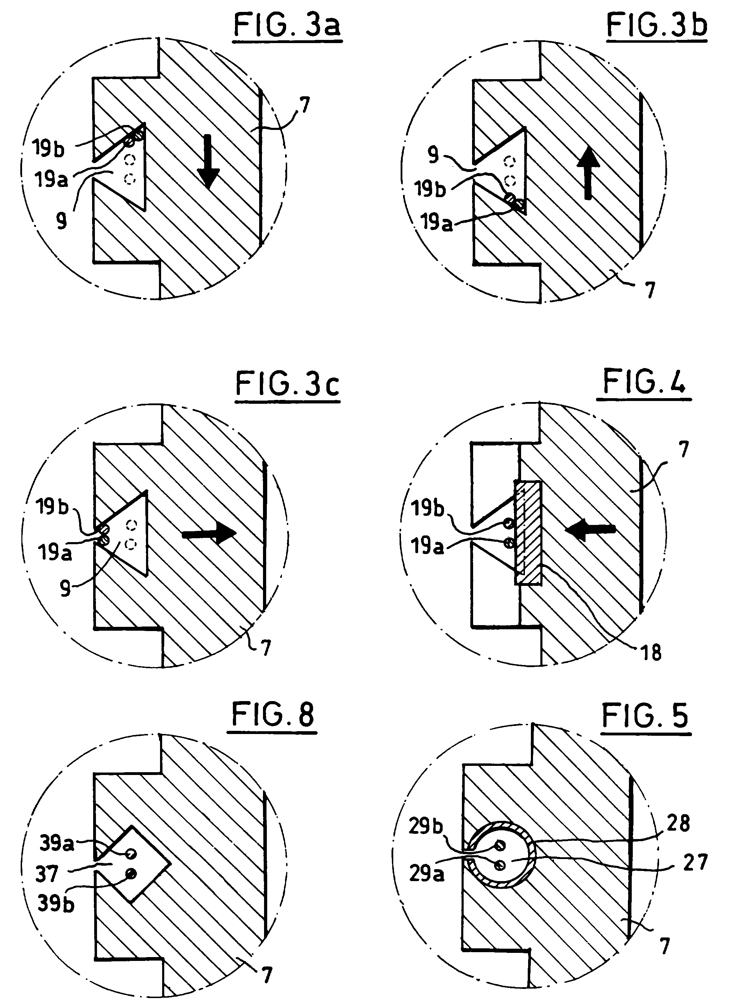

Die Stanzlöcher besitzen, wie aus den vergrößerten Darstellungen nach Fig. 3a)-c) hervorgeht, eine rautenförmige bzw. V-förmige Gestalt und umgeben jeweils zwei in geringem Abstand übereinander längs des Querarms (4) gespannte, leitende Drähte (18a,b) bzw. (19a,b).

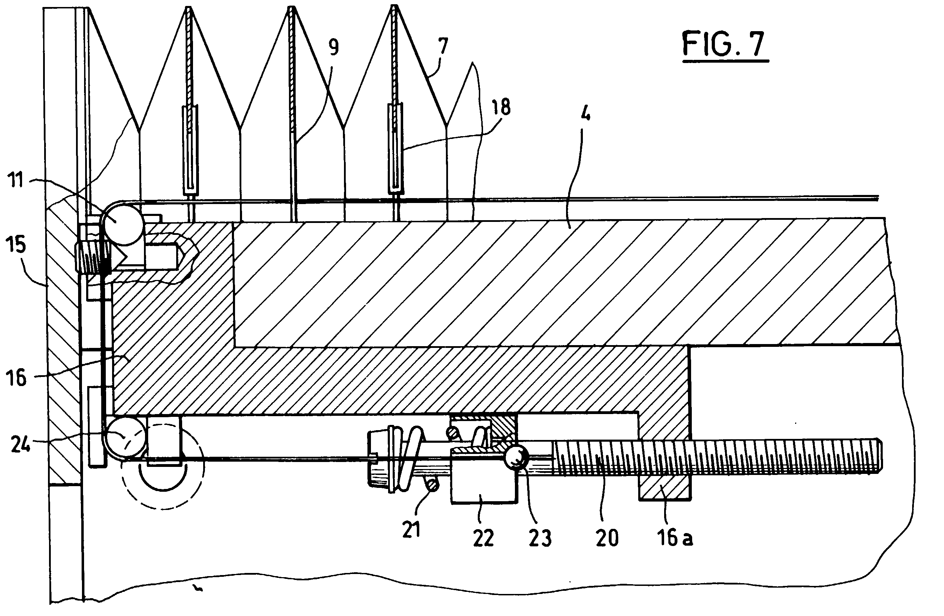

Die beiden Drähte (18a,b) bzw. (19a,b) jedes Paares sind an beiden Enden des Querarms über Umlenkrollen geführt und werden am vorderen Ende an der Aufnahme (5) für den Tastkopf des Meßgerätes, wie in Fig. 6 bzw. Fig. 7 dargestellt, durch eine in das Innere des Querarms (4) gelegte Spanneinrichtung so stark gespannt, daß sie über die Länge des Querarms von ca. 2m nicht nennenswert durchhängen und sich ohne äußere Einflüsse auch nicht berühren.

Um die Federkraft der Spanneinrichtung einstellen zu können, besteht letztere aus einer in eine Gewindebohrung (16a) in einem Einsatzteil (16) am vorderen Ende des Querarms (4) eingedrehte Stellschraube (20), die parallel zur Achse des Querarms ausgerichtet ist. Um die Stellschraube (20) ist eine Druckfeder (21) gelegt, die mit ihrem anderen Ende sich auf einem koaxial über die Stellschraube gelegten Druckstück (22) aus Isoliermaterial abstützt. In eine Kerbe des Druckstücks (22) sind die verdickten Enden (23) der über die zwei ebenfalls isolierende Umlenkrollen (11,24) geführten Drähte (19b) eingehängt. Eine gleichartige Spanneinrichtung ist auch für das andere Drahtpaar (18a,b) vorgesehen.

Die beiden Drähte jedes Paares (19a,b;18a,b) sind über eine hier nicht dargestellte Elektronik an die Notstop-Steuerung des Koordinatenmeßgerätes angeschlossen. Im Normalfalle, d.h. also, wenn keine seitlichen Kräfte auf den Faltenbalg (7) ausgeübt werden, hängen die beiden Drahtpaare in der Mitte der V-förmigen Ausnehmungen z.B. (9), wie dies in den Fig. 3a)-c) gestrichelt dargestellt ist.

Beim Einwirken äußerer Kräfte wie z.B. bei einer Kollision, verschieben sich jedoch die Trennstege des Faltenbalges (7) an der betreffenden Stelle, wo.die Kollision auftritt, und die V-förmige bzw. rautenförmige Gestalt der Ausnehmungen (9) in den Trennstegen hat zur Folge, daß die leitenden Drähte in den Spitzen der Ausnehmungen miteinander in Kontakt gebracht werden und in ihrer Funktion als elektrischer Schalter den hierbei eintretenden Kurzschluß melden. In der Fig. 3a) ist dieser Fall dargestellt für eine von oben auf den Faltenbalg einwirkende Kraft, in Fig. 3b) für eine von unten einwirkende Kraft und in Fig. 3c) für eine den Faltenbalg vom Querarm weg bewegende Kraft.

Zur sicheren Kontaktgabe bei seitlich auf den Faltenbalg zu wirkenden Kräften ist, wie in Fig. 7 dargestellt, jeder zweite Trennsteg des Faltenbalgs an der Stelle, wo die Drähte laufen, mit einer leitenden Kupferklemme (18) versehen. Diese leitende Kupferklemme stellt, wie aus der vergrößerten Darstellung nach Fig. 4 ersichtlich ist, auch bei seitlich auf die Führungsbahn hin gerichteten Kräften die Kontaktgabe sicher.

Im vorstehend beschriebenen Ausführungsbeispiel wird die Kontaktgabe durch die Kombination der entsprechenden Formgebung der Ausnehmungen bei einer Reihe von Trennstegen und einer Metallisierung der Ausnehmungen an einer Seite bei einer anderen Gruppe von Trennstegen erreicht. Es ist jedoch auch möglich, allein durch eine entsprechende Formgebung bzw. allein durch die Metallisierung der Ausnehmungen eine ausreichend gute Kontaktgabe für alle auftretenden Kollisionsfälle sicherzustellen. Hierzu können beispielsweise, wie im alternativen Ausführungsbeispiel nach Fig. 5 skizziert, ringförmige Ausnehmungen mit einem leitenden Kupferring versehen sein bzw. wie in Fig. 8 skizziert, rautenförmige Ausnehmungen verwendet sein.

In beiden Fällen können mit relativ wenigen Drahtpaaren, beispielsweise mit zwei Drahtpaaren, alle vorkommenden Kollisionsrichtungen erfaßt werden.

In den vorstehenden Ausführungsbeispielen wurde eine Schutzeinrichtung für den waagerechten Meßarm eines Koordinatenmeßgerätes in Ständerbauweise beschrieben. Es ist jedoch klar, daß die Schutzeinrichtung in gleicher Weise auch für andere Maschinentypen, wie beispielsweise für die vertikalen Pinolen von Koordinatenmeßgeräten in Portal- oder Brückenbauweise oder beispielsweise auch für Bearbeitungsmaschinen geeignet ist.

## Patentansprüche

1. Langgestrecktes, quer zu seiner Längsrichtung bewegliches Maschinenteil (4) mit einer Schutzvorrichtung und einem Faltenbalg (7), der das Maschinenteil (4) mindestens teilweise abdeckt und in Stegen Ausnehmungen (8, 9 ; 27; 37) aufweist, wobei durch die Verschiebung des Faltenbalges (7) durch auf ihn einwirkende Querkräfte ein elektrisches Signal ausgelöst wird, dadurch gekennzeichnet, daß in den Ausnehmungen (8,9;27;37) mindestens ein Paar längs des Maschinenteils gespannte, leitende Drähte (18a,b;19a,b;29a,b;39a,b) geführt ist, wobei die Formgebung der Ausnehmungen (8,9) bzw. eine Metallisierung (18;28) der Stege bei der Verschiebung des Faltenbalges (7) elektrischen Kontakt zwischen den Drähten (18a,b;19a,b;29a,b;39a,b) des mindestens einen Paares herstellt.

2. Maschinenteil nach Anspruch 1, wobei sich das bzw. die Drahtpaar(e) (18a,b;19a,b) über die volle Länge des Maschinenteils (4) erstrecken und von einer im Innern des hohlen Maschinenteils (4) angeordneten Spanneinrichtung (20-23) mittels Umlenkrollen (11,24) gespannt sind.

3. Maschinenteil nach Anspruch 1, wobei das bzw. die Drahtpaar(e) in V-förmigen bzw. rautenförmigen Ausnehmungen (8,9,37) in den Stegen des Faltenbalges (7) geführt sind.

4. Maschinenteil nach Anspruch 1, wobei das bzw. die Drahtpaar(e) in Ausnehmungen (27) geführt sind, die mit leitenden Klemmen (18,28), vorzugsweise Kupferklemmen, versehen sind.

5. Maschinenteil nach Anspruch 1, wobei die Stege des Faltenbalges (7) abwechselnd V-förmige bzw. rautenförmige Ausnehmungen (8,9) und leitende Klemmen (13) besitzen.

6. Maschinenteil nach Anspruch 1, wobei das langgestreckte Maschinenteil der Meßarm (4) eines Koordinatenmeßgerätes (1) ist und das bzw. die Drahtpaar(e) (18a,b;19a,b) an die Kollisionsschutzschaltung des Koordinatenmeßgerätes angeschlossen ist sind.

## Claims

1. An elongated machine component (4) being movable in a direction transversely to its longitudinal axis, and comprising a protective device and a bellows (7) covering at least partially the machine component (4) and having partition legs with cutouts therein, whereby in response to a displacement of said bellows (7) by forces acting in a transverse direction an electrical signal is generated, characterized by the fact that at least one pair of electrically conductive wires (18a,b;19a,b;29a,b;39a,b) are guided in said cutouts (8,9;27;37) and stretched along said machine component; whereby the shape of said cutouts (8,9) or a metallisation (18;28) of said partition legs provide for electrical contact between said wires (18a,b;19a,b;29a,b;39a,b) of said at least one pair, when said bellows is displaced.

2. The machine component of claim 1, whereby said pair (s) of wires (18a,b;19a,b) extend over the entire length of said machine component (4) and are tensioned by a tensioning device (20-23) being mounted within the hollow interior of said machine component (4) by redirect roller means (11,24).

3. The machine component of claim 1, whereby said pair (s) of wires are guided in V-shaped or lozenge shaped cutouts (8,9,37) in the partition legs of said bellows (7).

4. The machine component of claim 1, whereby said pair (s) of wires are guided in cutouts each being provided with conductive clamps (18,28), preferably copper clamps.

5. The machine component of claim 1, whereby the partition legs of said bellows (7) comprise V-shaped or lozenge shaped cutouts (8,9) in one leg, and metal clamps (18) in the following next leg respectively.

6. The machine component of claim 1, whereby said extending machine component is the measuring arm (4) of a coordinate measuring apparatus (1) having a collision protection circuit and said pair (s) of wires (18a,b;19a,b) are connected to said collision protection circuit.

## Revendications

1. Pièce de machine allongée et mobile perpendiculairement à son axe longitudinal (4), dotée d'un dispositif de protection et d'un soufflet (7) qui recouvre au moins partiellement ladite pièce de machine (4) et qui présente dans ces nervures des cavités (8, 9; 27; 37), la déformation dudit soufflet (7) par des forces transversales qui lui sont imprimées déclenchant un signal électrique, caractérisé en ce qu'au moins une paire de fils conducteurs tendus le long de la pièce de machine (18a, b; 19a, b; 29a, b; 39a, b) est guidée à l'intérieur des cavités (8, 9; 27; 37), la forme desdites cavités (8, 9) ou une métallisation (18; 28) des nervures assurant la mise en contact électrique entre les fils constituant au moins une paire de fils (18a, b; 19a, b; 29a, b; 39a, b) lors de la déformation du soufflet (7).

2. Pièce de machine selon la revendication (1), où la ou les paires de fils (18a, b; 19a, b) s'étendent sur toute la longueur de la pièce de machine (4) et qu'elles sont tendues, par l'intermédiaire de poulies de renvoi (11, 24), par un dispositif tendeur (20 à 23) aménagé à l'intérieur de la pièce de machine creuse.

3. Pièce de machine selon la revendication (1), où la ou les paires de fils sont guidées à l'intérieur de cavités en forme de V ou de losange (8, 9, 37) pratiquées dans les nervures du soufflet (7).

4. Pièce de machine selon la revendication (1), où la ou les paires de fils sont guidées dans des cavités (27) munies de bornes conductrices (18, 28), de préférence de bornes en cuivre.

5. Pièce de machine selon la revendication (1), où les nervures du soufflet (7) présentent en alternance des cavités en forme de V ou de losange (8, 9) et des bornes conductrices (18).

6. Pièce de machine selon la revendication (1), où la pièce de machine allongée est constituée par le bras de mesure (4) d'une machine à mesurer multicoordonnées (1) et que la ou les paires de fils (18a, b; 19a, b) sont connectées au circuit de protection anti-collision de ladite machine à mesurer multicoordonnées.
